# EUROPEAN PATENT SPECIFICATION

(11) **EP 3 617 933 B1**
(45) Date of publication and mention of the grant of the patent: **12.06.2024**
(21) Application number: 18191615.6
(22) Date of filing: 30.08.2018
(51) Int. Cl.: G06V 10/14, G06V 20/52

(54) **DETECTING ROOM OCCUPANCY WITH BINARY PIR SENSORS**
ERKENNUNG DER RAUMBELEGUNG MIT BINÄREN PIR-SENSOREN
DÉTECTION DE L'OCCUPATION D'UNE PIÈCE AVEC DES CAPTEURS PIR BINAIRES

(43) Date of publication of application: 04.03.2020
(73) Proprietor: Tridonic GmbH & Co. KG, 6851 Dornbirn (AT); Zumtobel Lighting GmbH, 6850 Dornbirn (AT)
(72) Inventor: Hartmann, Martin, 6830 Rankweil (AT); Zeljko, Peric, 6850 Dornbirn (AT); Keller, Katharina, 88131 Lindau (DE); Siegel, Martin, 88097 Eriskirch (DE); Jelicic, Vana, 6850 Dornbirn (AT)
(74) Representative: Beder, Jens

(56) References cited:
- US-A1- 2017 364 817
- US-A1- 2018 232 637
- JAVED ABBAS ET AL: "Design and Implementation of a Cloud Enabled Random Neural Network-Based Decentralized Smart Controller With Intelligent Sensor Nodes for HVAC", IEEE INTERNET OF THINGS JOURNAL, IEEE, USA, vol. 4, no. 2, 1 April 2017 (2017-04-01), pages 393-403, XP011647755, DOI: 10.1109/JIOT.2016.2627403

## Description

The present invention relates to a method and system for estimating the number of live objects inside a monitored environment and in particular to a method and system for estimating the number of occupants in a room with a passive infrared sensor outputting a binary signal.

A passive infrared sensor (PIR sensor) detects changes in the amount of infrared radiation and is most often used in PIR-based motion detectors for detecting the presence of persons in lighting systems.

Further, PIR sensors are used for determining motion directions of persons or room occupancy, which is necessary for controlling building systems and room management.

EP 2 732 440 A2 discloses a method for counting the number of persons passing through a first area sensed by a first PIR sensor and a second area sensed by a second PIR sensor.

A method, in which the number of persons in a room is estimated based on an analog signal (RAW signal) of a PIR sensor, is described in Yordan P. Raykov et al: "Predicting room occupancy with a single passive infrared (PIR) sensor through behavior extraction", UBICOMP '16, SEPTEMBER 12-16, 2016, HEIDELBERG, GERMANY.

The document US 2017/364817 A1 discloses estimating a number of occupants in a region. The document "JAVED ABBAS ET AL: "Design and Implementation of a Cloud Enabled Random Neural Network-Based Decentralized Smart Controller With Intelligent Sensor Nodes for HVAC", IEEE INTERNET OF THINGS JOURNAL, vol. 4, no. 2, 1 April 2017, pages 393-403, XP011647755" discloses a random neural network (RNN)-based occupancy estimator that is embedded in a sensor node which estimates the number of occupants inside a room.

However, PIR sensors are normally used as binary sensors, i.e., they can detect whether a heat source (person) is present or not in the sensing region of the PIR sensor and output a binary signal. A modification of such sensors is complex and sensors, which provide a RAW signal, are expensive and less reliable due to false positive (manly) and true negative results.

It is an object of the present invention to overcome the above mentioned drawbacks and to provide an improved system for estimating the number of persons inside a monitored environment. More specifically, it is an object of the invention to provide a system and method, with which the number of persons inside an area can be estimated with low effort and costs.

This object is achieved by a system and a method according to the enclosed independent claims. Advantageous features of the present invention are defined in the corresponding subclaims.

The system for estimating the number of objects inside an area comprises at least one PIR sensor configured to detect the presence of a person in at least a part of the area and to output a binary signal which is a sequence of pulses caused by the presence of least one person in the part of the area and a computing unit configured to estimate the number of persons inside the area based on the sequence using a machine learned model.

Thus, with the present invention, even if a binary PIR sensor (PIR-based motion detector) is already installed for presence detection, the system can be easily integrated into existing buildings or only minimal modifications are required. Preferably, time delay of the PIR sensor between two consecutive presence detections is less or equal 2 seconds.

To further improve the accuracy, the system can comprise a plurality of passive infrared sensors, wherein each passive infrared sensor is configured to detect the presence of an object in a different part of the area and to output a binary signal including the sequence depending on the detected presence of at least one person and their actions in the sensed area. The computing unit is configured to estimate the number of objects inside the area based on sequences of binary signals received from the plurality of passive infrared sensors.

Alternatively or in addition, the system can comprise at least one of an air pollution sensor, a sound level meter and a temperature sensor, wherein the computing unit is configured to estimate the number of objects inside the area based on at least one sequence of the binary signal received from the at least one passive infrared sensor and the sensor signal received from the air pollution sensor, the sound level meter or the temperature sensor by machine learning.

The computing unit can be configured to perform the machine learning by producing a model that assigns different binary signals to one of a plurality of classes, wherein each class corresponds to predetermined numbers of objects.

Alternatively, the computing unit can be configured to perform the machine learning by producing a model that assigns different sequences to a number of objects.

The area can be a room in a building, wherein the objects are persons and the computing unit is configured to produce the model using the number of persons counted manually or automatically. To this end, the system comprises a means for inputting or receiving the number of persons present in a specified period.

Alternatively or in addition, the system can comprises a means for receiving, from the room booking system, the number of persons for which the room is booked for a specified period of time and a means for determining the difference between the number of persons and the number of objects estimated by the computing unit for the specified period of time and for outputting a signal if the difference exceeds a certain threshold.

A method for estimating the number of objects inside an area comprises the steps of:
- detecting, by at least one passive infrared sensor, the presence of a person in at least a part of the area,
- outputting, by the at least one passive infrared sensor, a binary signal including a sequence of highs and lows depending on the detected presence of a person, wherein the binary signal is high when the presence of a person (P) is detected sequence depending on presence of the least one person in the part of the area and
- estimating the number of objects inside the area based on the sequence based on a machine learned model.

Preferably, in the detecting step, each of a plurality of passive infrared sensors detects the presence of persons in a different part of the area and in the estimating step, the number of persons inside the area is estimated based on the sequences of the binary signals received from the plurality of passive infrared sensors.

The method can further comprise the step of sensing the area bv at least one of an air pollution sensor, a sound level meter and a temperature sensor, wherein in the estimating step, the number of objects inside the area is estimated based on at least one binary signal received from the at least one passive infrared sensor and the sensor signal received from the air pollution sensor, the sound level meter or the temperature sensor by machine learning.

The machine learning can be performed by producing a model that assigns different sequences to one of a plurality of classes, wherein each class corresponds to a predetermined number of objects.

Alternatively, the machine learning can be performed by producing a model that assigns different sequences to a number of persons.

The area can be a room in a building and the method further comprises the steps of:
- manually or automatically counting the number of persons present in the room at a specified period of time and
- producing the model using the counted number of persons.

Alternatively, the method can further comprise the steps of:
- receiving, from the room booking system, the number of persons for which the room is booked for a specified period of time,
- determining the difference between the number of persons and the estimated number of objects and
- outputting a signal if the difference exceeds a certain threshold.

The invention is to be explained more detailed in the following with reference to the accompanying drawing, wherein:
FIG. 1 shows a conference room with the system according an embodiment of the present invention,
FIG. 2 shows a schematic structural diagram of the system shown in FIG. 1, and
FIG. 3 shows a flowchart of the method according to an embodiment of the present invention.

The same features are denoted in the figures by the same reference signs.

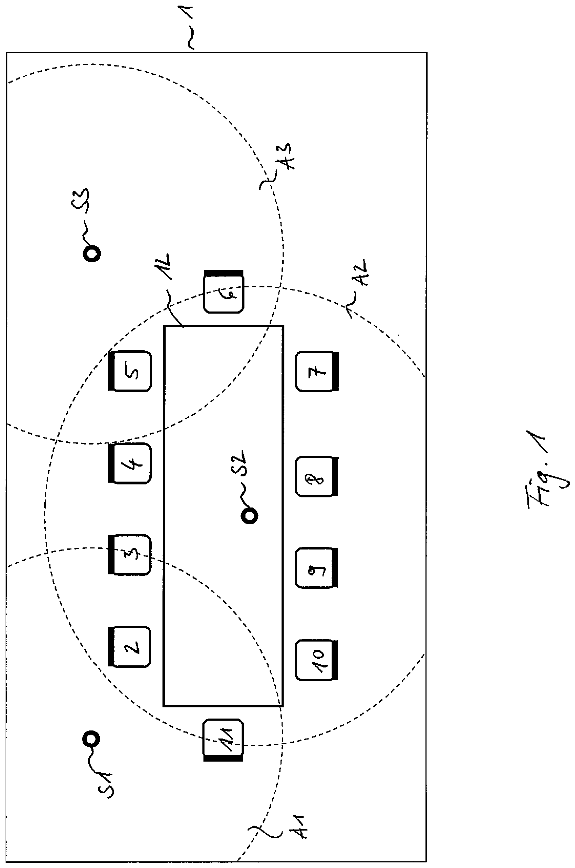

FIG. 1 shows top view of a conference room 1, in which ten chairs 2..11 are positioned around a table 12 at room center and three PIR sensors S1, S2, S3 are mounted on the ceiling at different positions to detect the presence of an object within the respective detection areas A1, A2, A3 of the PIR sensors S1, S2, S3.

Based on the detections, to be more precise based on the sequence of signal outputs which are "high", the number of persons (not shown) inside the conference room 1 is estimated, wherein the detection areas S1, S2, S3 do not cover the complete area of conference room 1 and the detection area A2 partially overlaps with the detection areas A1 and A2. The number of PIR sensors S1, S2, S3 depends on the room size/layout and can be one, two or more than three.

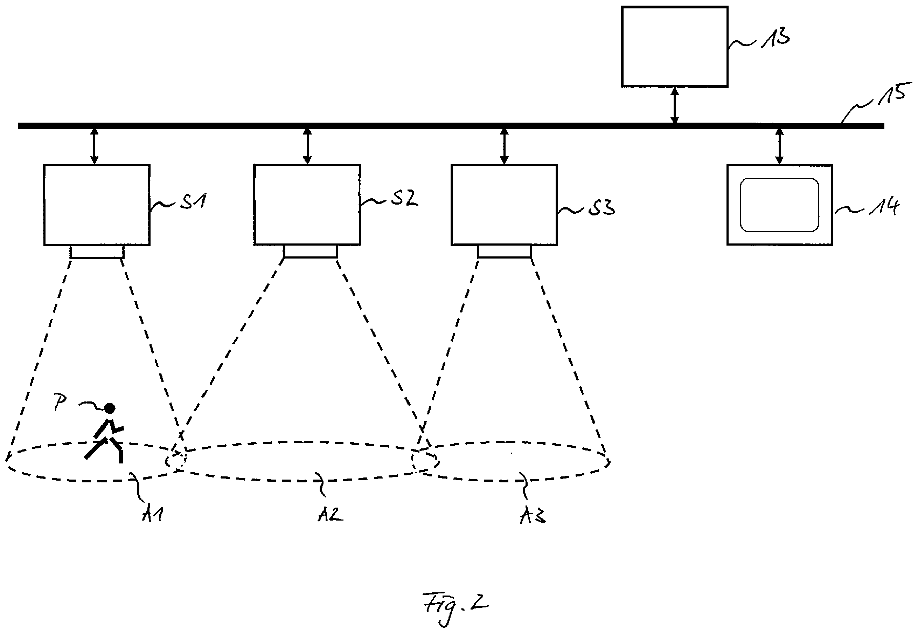

FIG. 2 shows a schematic structural diagram of the system for estimating the number of persons P inside the conference room 1 shown in FIG. 1. The system shown in FIG. 2 comprises the PIR sensors S1, S2, S3, a computing unit 13 for estimating the number of objects based on the sensor signals, a display device 14 for displaying the results of the estimation and a data bus 15 that connects the PIR sensors S1, S2, S3, the computing unit 13 and the display device 14.

The computing unit 13 receives, via the data bus 15, from each PIR sensor S1, S2, S3, a binary signal indicating whether or not at least one person P is present in the respective detection area A1, A2, A3, estimates the number of persons P inside the conference room 1 based on the binary signals by a model that was train by machine learning in advance, and transmits the result to the display device 14.

Machine learning itself is a well-known technique, in which a general rule that maps inputs to outputs is learned based on example inputs during a training phase and their desired outputs. For example, inputs are divided into two or more classes and a model that assigns unseen inputs to one of these classes is generated. It is to be noted, that the output signal, when a person is present in a sensing area of a sensor, is not continuously "high", but only if an internal threshold of the sensor is exceeded. Thus, given presence of a person, the sensor will produce a sequence of "highs" and "lows" which are used as input into the machine learned model.

The computing unit 13 learns a model that determines from binary signal sequences a class that corresponds to predetermined numbers of persons, e.g. class 1 corresponds to 1..2 persons, class 2 corresponds to 3..5 persons, class 3 corresponds to 6.. 10 persons and class 4 corresponds to 11 or more persons (number of persons exceeds the number of chairs 2..11). Alternatively, a model that assigns binary signals to an exact number of persons can be learned.

For said training phase, the real number of persons present in the conference room 1 is counted manually and inputted by an input device (not show). Alternatively, the real number of persons can be determined by image recognition, wherein the persons are observed with a video system and are recognized/counted by an image image-processing system.

The number of persons P estimated based on the model is received and displayed by the display device 14.

The results of the estimation can be used, for instance, to optimize the use of rooms by a room booking system that determines an appropriate room size for a certain meeting based on the estimated numbers from former meetings and/or to compare the number of persons P planned for a meeting with the estimated number of persons P and to output a warning message if the difference between the planned number and the estimated number exceeds or falls below a certain threshold. The system for estimating the number of persons can be a part of the room booking system, wherein the step of comparing the number of persons P planned for the meeting with the estimated number of persons P and/or the step of outputting the warning message can be performed by the computing unit 13 or another control device of the room booking system.

On the other hand, the number of persons P planned/set by the room booking system can be used as the desired output for generating/learning the model when the difference between the planned number and the actual number is generally small. The information on the planned number of persons P can be transmitted from the room booking system to the computing unit 13 via the data bus 15 or a radio connection. Alternatively, the room booking system can be a part of the computing unit 13.

The computing unit 13 can be a central building control unit and/or can be designed as a microcontroller, personal computer or a tablet.

To increase the accuracy, the number of persons P planned/set by the room booking system and/or signals of other sensors in the conference room 1 that vary depending on the number of persons P can be used for the estimation. For example, in addition to the PIR sensor S1, S2, S3, the number of persons P planned/set by the room booking system and/or the output of an air pollution sensor, a sound level meter and/or a temperature sensor can be used to generate the model and to estimate the number of persons P.

Although the estimation of the number of persons P is an important field of application, also animals, which are detectable by the PIR sensor S1, S2, S3 can be counted, e.g., the number of animals inside a fenced area.

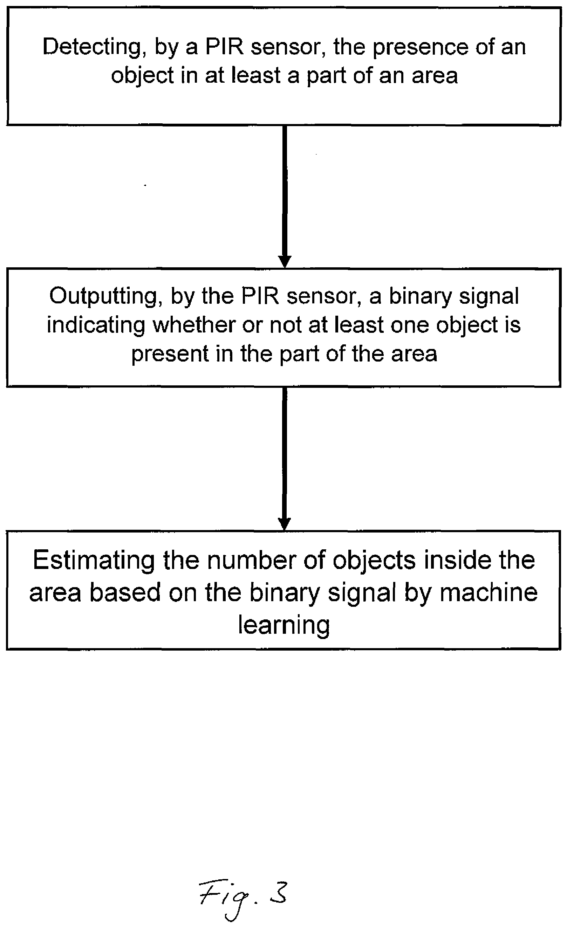

FIG. 3 shows a very simplistic flowchart showing the single steps performed by the realisation of the method described in detail above.

## Claims

1. A system for estimating the number of persons (P) inside an area (1), the system comprising
at least one passive infrared sensor (S1..S3) configured to detect the presence of a person (P) in at least a part (A1..A3) of the area (1) and to output a binary signal depending on presence of a person in the part (A1..A3) of the area (1), wherein the binary signal includes a sequence of highs and lows depending on the presence of a person (P) and the binary signal is high when the presence of a person (P) is detected, and
a computing unit (13) configured to estimate the number of persons (P) inside the area (1) based on the sequence of highs and lows by a machine learned model,
wherein the sequence of highs and lows is input into the machine learned model, and
the computing unit (13) is configured to perform the machine learning by producing a model that allows to determine from different sequences of highs and lows
- one of a plurality of classes, wherein each class corresponds to predetermined numbers of persons (P), or
- a number of persons (P).

2. The system according to claim 1, wherein
the system comprises a plurality of passive infrared sensors (S1..S3), wherein each passive infrared sensor (S1..S3) is configured to detect the presence of an object (P) in a different part (A1..A3) of the area (1) and to output a respective binary signal, and
the computing unit (13) is configured to estimate the number of persons (P) inside the area (1) based on sequences included in the binary signals received from the plurality of passive infrared sensors (S1..S3).

3. The system according to claim 1 or 2, wherein
the system further comprises at least one of an air pollution sensor, a sound level meter and a temperature sensor; and
the computing unit (13) is configured to estimate the number of persons (P) inside the area based on at least one sequence received from the at least one passive infrared sensor (S1..S3) and the sensor signal received from the air pollution sensor, the sound level meter or the temperature sensor by machine learning.

4. The system according to anyone of claims 1 to 3, wherein
the area (1) is a room in a building;
the system further comprises means for receiving the number of persons which is present in the room for a specified period of time; and
the computing unit (13) is configured to produce or improve the model using the number of persons (P) received from said receiving means.

5. The system according to anyone of claims 1 to 3, wherein
the area (1) is a room in a building; and
the system further comprises means for receiving, from a room booking system, the number of persons for which the room is booked for a specified period of time, and a means for determining the difference between the number of persons and the number of objects (P) estimated by said the computing unit (13) for said specified period of time and to output a signal if the difference exceeds a certain threshold.

6. A computer-implemented method for estimating the number of persons (P) inside an area (1), the method comprising the steps of:
detecting, by at least one passive infrared sensor (S1..S3), the presence of a person (P) in at least a part (A1..A3) of the area (1);
outputting, by the at least one passive infrared sensor (S1..S3), a binary signal depending on presence of a person (P) in the part (A1..A3) of the area (1), wherein the binary signal includes a sequence of highs and lows depending on the presence of a person (P) and the binary signal is high when the presence of a person (P) is detected, and
estimating the number of persons (P) inside the area (1) based on the sequence of highs and lows based on a machine learned model,
wherein the sequence of highs and lows is input into the machine learned model, and
the machine learning is performed by producing a model that allows to determine from different sequences of highs and lows
- one of a plurality of classes, wherein each class corresponds to a predetermined number of persons (P), or
- a number of persons (P).

7. The method according to claim 6, wherein
in the detecting step, each of a plurality of passive infrared sensors (S1..S3) detects the presence of a person (P) in a different part (A1..A3) of the area (1); and
in the estimating step, the number of persons (P) inside the area (1) is estimated based on sequences included in the binary signals received from the plurality of passive infrared sensors (S1..S3).

8. The method according to claim 6 or 7, further comprising the step of:
sensing the area (1) by at least one of an air pollution sensor, a sound level meter and a temperature sensor; wherein
in the estimating step, the number of persons (P) inside the area (1) is estimated based on at least one sequence received from the at least one passive infrared sensor (S1..S3) and the sensor signal received from the air pollution sensor, the sound level meter or the temperature sensor by machine learning.

9. The method according to anyone of claims 6 to 8, wherein
the area (1) is a room in a building; and
the method further comprises the step of:
receiving the number of persons which is present in the room in a specified period of time; wherein
the model is produced using the number of persons (P) received.

10. The method according to anyone of claims 6 to 8, wherein
the area (1) is a room in a building; and the method further comprises the steps of:
receiving, from a room booking system, the number of persons (P) for which the room is booked for a specified period of time;
determining the difference between the number of persons and the estimated number of persons (P); and
outputting a signal if the difference exceeds a certain threshold.

## Patentansprüche

1. System zum Schätzen der Anzahl von Personen (P) innerhalb eines Bereichs (1), das System umfassend
mindestens einen passiven Infrarotsensor (S1..S3), der konfiguriert ist, um die Anwesenheit einer Person (P) in mindestens einem Teil (A1..A3) des Bereichs (1) zu erkennen, und ein Binärsignal in Abhängigkeit von der Anwesenheit einer Person in dem Teil (A1..A3) des Bereichs (1) auszugeben, wobei das Binärsignal eine Sequenz von Höhen und Tiefen einschließt, die in Abhängigkeit von der Anwesenheit einer Person (P) sind, und das Binärsignal hoch ist, wenn die Anwesenheit einer Person (P) erkannt wird, und
eine Recheneinheit (13), die konfiguriert ist, um die Anzahl von Personen (P) innerhalb des Bereichs (1) basierend auf der Sequenz von Höhen und Tiefen durch ein maschinenerlerntes Modell zu schätzen,
wobei die Sequenz von Höhen und Tiefen in das maschinenerlernte Modell eingegeben wird, und
die Recheneinheit (13) konfiguriert ist, um das Maschinenlernen durchzuführen, durch Erzeugen eines Modells, das es ermöglicht, aus unterschiedlichen Sequenzen Höhen und Tiefen zu bestimmen
- eine aus einer Vielzahl von Klassen, wobei jede Klasse vorbestimmten Anzahlen von Personen (P) entspricht, oder
- eine Anzahl von Personen (P).

2. System nach Anspruch 1, wobei
das System eine Vielzahl von passiven Infrarotsensoren (S1..S3) umfasst, wobei jeder passive Infrarotsensor (S1..S3) konfiguriert ist, um die Anwesenheit eines Objekts (P) in einem unterschiedlichen Teil (A1..A3) des Bereichs (1) zu erkennen und ein jeweiliges Binärsignal auszugeben, und
die Recheneinheit (13) konfiguriert ist, um die Anzahl von Personen (P) innerhalb des Bereichs (1) basierend auf Sequenzen zu schätzen, die in den Binärsignalen enthalten sind, die von der Vielzahl von passiven Infrarotsensoren (S1..S3) empfangen werden.

3. System nach Anspruch 1 oder 2, wobei
das System ferner mindestens einen von einem Luftverschmutzungssensor, einem Schallniveaumesser und einem Temperatursensor umfasst; und
die Recheneinheit (13) konfiguriert ist, um die Anzahl von Personen (P) innerhalb des Bereichs basierend auf mindestens einer Sequenz, die von dem mindestens einen passiven Infrarotsensor (S1..S3) empfangen wird, und dem Sensorsignal, das von dem Luftverschmutzungssensor empfangen wird, dem Schallniveaumesser oder dem Temperatursensor durch Maschinenlernen zu schätzen.

4. System nach einem der Ansprüche 1 bis 3, wobei
der Bereich (1) ein Raum in einem Gebäude ist;
das System ferner Mittel zum Empfangen der Anzahl von Personen umfasst, die in dem Raum für einen spezifizierten Zeitraum anwesend sind; und
die Recheneinheit (13) konfiguriert ist, um das Modell unter Verwendung der Anzahl von Personen (P), die von dem Empfangsmittel empfangen werden, zu erzeugen oder zu verbessern.

5. System nach einem der Ansprüche 1 bis 3, wobei
der Bereich (1) ein Raum in einem Gebäude ist; und
das System ferner Mittel zum Empfangen, von einem Raumbuchungssystem, der Anzahl von Personen, für die der Raum für einen spezifizierten Zeitraum gebucht ist, und ein Mittel zum Bestimmen der Differenz zwischen der Anzahl von Personen und der Anzahl von Objekten (P) umfasst, die durch die Recheneinheit (13) für den spezifizierten Zeitraum geschätzt werden, und um ein Signal auszugeben, falls die Differenz einen bestimmten Schwellenwert überschreitet.

6. Computerimplementiertes Verfahren zum Schätzen der Anzahl von Personen (P) innerhalb eines Bereichs (1), das Verfahren umfassend die Schritte:
Erkennen, durch mindestens einen passiven Infrarotsensor (S1..S3), der Anwesenheit einer Person (P) in mindestens einem Teil (A1..A3) des Bereichs (1);
Ausgeben, durch den mindestens einen passiven Infrarotsensor (S1..S3), eines Binärsignals in Abhängigkeit von der Anwesenheit einer Person (P) in dem Teil (A1..A3) des Bereichs (1), wobei das Binärsignal eine Sequenz von Höhen und Tiefen in Abhängigkeit von der Anwesenheit einer Person (P) einschließt, und das Binärsignal hoch ist, wenn die Anwesenheit einer Person (P) erkannt wird, und
Schätzen der Anzahl von Personen (P) innerhalb des Bereichs (1) basierend auf der Sequenz von Höhen und Tiefen basierend auf einem maschinenerlernten Modell,
wobei die Sequenz von Höhen und Tiefen in das maschinenerlernte Modell eingegeben wird, und
das Maschinenlernen durchgeführt wird, durch Erzeugen eines Modells, das es ermöglicht, aus unterschiedlichen Sequenzen Höhen und Tiefen zu bestimmen
- eine aus einer Vielzahl von Klassen, wobei jede Klasse einer vorbestimmten Anzahl von Personen (P) entspricht, oder
- eine Anzahl von Personen (P).

7. Verfahren nach Anspruch 6, wobei
in dem Erkennungsschritt jeder von einer Vielzahl von passiven Infrarotsensoren (S1..S3) die Anwesenheit einer Person (P) in einem unterschiedlichen Teil (A1..A3) des Bereichs (1) erkennt; und
in dem Schätzungsschritt die Anzahl von Personen (P) innerhalb des Bereichs (1) basierend auf Sequenzen geschätzt wird, die in den Binärsignalen enthalten sind, die von der Vielzahl von passiven Infrarotsensoren empfangen werden (S1..S3).

8. Verfahren nach Anspruch 6 oder 7, ferner umfassend den Schritt:
Erfassen des Bereichs (1) durch mindestens einen von einem Luftverschmutzungssensor, einem Schallniveaumesser und einem Temperatursensor; wobei
in dem Schätzungsschritt die Anzahl von Personen (P) innerhalb des Bereichs (1) basierend auf mindestens einer Sequenz, die von dem mindestens einen passiven Infrarotsensor (S1..S3) empfangen wird, und dem Sensorsignal, das von dem Luftverschmutzungssensor empfangen wird, dem Schallniveaumesser oder dem Temperatursensor durch Maschinenlernen geschätzt wird.

9. Verfahren nach einem der Ansprüche 6 bis 8, wobei
der Bereich (1) ein Raum in einem Gebäude ist; und
und das Verfahren ferner den folgenden Schritt umfasst:
Empfangen der Anzahl von Personen, die in dem Raum für einen spezifizierten Zeitraum anwesend sind; wobei
das Modell unter Verwendung der Anzahl von empfangenen Personen (P) erzeugt wird.

10. Verfahren nach einem der Ansprüche 6 bis 8, wobei
der Bereich (1) ein Raum in einem Gebäude ist; und das Verfahren ferner die folgenden Schritte umfasst:
Empfangen, von einem Raumbuchungssystem, der Anzahl von Personen (P), für die der Raum für einen spezifizierten Zeitraum gebucht ist;
Bestimmen der Differenz zwischen der Anzahl von Personen und der geschätzten Anzahl von Personen (P); und
Ausgeben eines Signals, falls die Differenz einen bestimmten Schwellenwert überschreitet.

## Revendications

1. Système permettant d'estimer le nombre de personnes (P) à l'intérieur d'une zone (1), le système comprenant
au moins un capteur à infrarouge passif (S1..S3) configuré pour détecter la présence d'une personne (P) dans au moins une partie (A1..A3) de la zone (1) et pour émettre un signal binaire en fonction de la présence d'une personne dans la partie (A1..A3) de la zone (1), dans lequel le signal binaire comporte une séquence de maximums et de minimums en fonction de la présence d'une personne (P) et le signal binaire est élevé lorsque la présence d'une personne (P) est détectée, et
une unité de calcul (13) configurée pour estimer le nombre de personnes (P) à l'intérieur de la zone (1) sur la base de la séquence de maximums et de minimums par un modèle appris par machine,
dans lequel la séquence de maximums et de minimums est introduite dans le modèle appris par machine, et
l'unité de calcul (13) est configurée pour effectuer l'apprentissage machine en produisant un modèle qui permet de déterminer à partir de séquences différentes de maximums et de minimums
- l'une parmi une pluralité de classes, dans lequel chaque classe correspond à des nombres prédéterminés de personnes (P), ou
- un nombre de personnes (P).

2. Système selon la revendication 1, dans lequel
le système comprend une pluralité de capteurs infrarouges passifs (S1..S3), dans lequel chaque capteur infrarouge passif (S1..S3) est configuré pour détecter la présence d'un objet (P) dans une partie différente (A1..A3) de la zone (1) et pour émettre un signal binaire respectif, et
l'unité de calcul (13) est configurée pour estimer le nombre de personnes (P) à l'intérieur de la zone (1) sur la base de séquences comprises dans les signaux binaires reçus de la pluralité de capteurs infrarouges passifs (S1..S3).

3. Système selon la revendication 1 ou 2, dans lequel
le système comprend en outre au moins un parmi un capteur de pollution atmosphérique, un sonomètre et un capteur de température ; et
l'unité de calcul (13) est configurée pour estimer le nombre de personnes (P) à l'intérieur de la zone sur la base d'au moins une séquence reçue de l'au moins un capteur infrarouge passif (S1..S3) et du signal de capteur reçu du capteur de pollution atmosphérique, du sonomètre ou du capteur de température par apprentissage machine.

4. Système selon l'une quelconque des revendications 1 à 3, dans lequel
la zone (1) est une pièce dans un bâtiment ;
le système comprend en outre un moyen permettant de recevoir le nombre de personnes présentes dans la pièce pendant une période de temps spécifiée ; et
l'unité de calcul (13) est configurée pour produire ou améliorer le modèle à l'aide du nombre de personnes (P) reçues dudit moyen de réception.

5. Système selon l'une quelconque des revendications 1 à 3, dans lequel
la zone (1) est une pièce dans un bâtiment ; et
le système comprend en outre un moyen permettant de recevoir, depuis un système de réservation de pièce, le nombre de personnes pour lesquelles la pièce est installée pendant une période de temps spécifiée, et un moyen permettant de déterminer la différence entre le nombre de personnes et le nombre d'objets (P) estimés par ladite unité de calcul (13) pour ladite période de temps spécifiée et pour émettre un signal si la différence dépasse un certain seuil.

6. Procédé mis en oeuvre par ordinateur permettant d'estimer le nombre de personnes (P) à l'intérieur d'une zone (1), le procédé comprenant les étapes consistant à :
détecter, par au moins un capteur infrarouge passif (S1..S3), la présence d'une personne (P) dans au moins une partie (A1..A3) de la zone (1) ;
émettre, par l'au moins un capteur infrarouge passif (S1..S3), un signal binaire en fonction de la présence d'une personne (P) dans la partie (A1..A3) de la zone (1), dans lequel le signal binaire comporte une séquence de maximums et de minimums en fonction de la présence d'une personne (P) et le signal binaire est élevé lorsque la présence d'une personne (P) est détectée, et
estimer le nombre de personnes (P) à l'intérieur de la zone (1) sur la base de la séquence de maximums et de minimums sur la base d'un modèle appris par machine,
dans lequel la séquence de maximums et de minimums est introduite dans le modèle appris par machine, et
l'apprentissage machine est effectué en produisant un modèle qui permet de déterminer à partir de séquences différentes de maximums et de minimums
- l'une parmi une pluralité de classes, dans lequel chaque classe correspond à un nombre prédéterminé de personnes (P), ou
- un nombre de personnes (P).

7. Procédé selon la revendication 6, dans lequel
dans l'étape de détection, chacun d'une pluralité de capteurs infrarouges passifs (S1..S3) détecte la présence d'une personne (P) dans une partie différente (A1..A3) de la zone (1) ; et
dans l'étape d'estimation, le nombre de personnes (P) à l'intérieur de la zone (1) est estimé sur la base de séquences comprises dans les signaux binaires reçus de la pluralité de capteurs infrarouges passifs (S1..S3).

8. Procédé selon la revendication 6 ou 7, comprenant en outre l'étape consistant à :
détecter la zone (1) par au moins l'un parmi un capteur de pollution atmosphérique, un sonomètre et un capteur de température ; dans lequel
dans l'étape d'estimation, le nombre de personnes (P) à l'intérieur de la zone (1) est estimé sur la base d'au moins une séquence reçue de l'au moins un capteur infrarouge passif (S1..S3) et du signal de capteur reçu du capteur de pollution atmosphérique, du sonomètre ou du capteur de température par apprentissage machine.

9. Dispositif d'éclairage selon l'une quelconque des revendications 6 à 8, dans lequel
la zone (1) est une pièce dans un bâtiment ; et
et le procédé comprend en outre l'étape consistant à :
recevoir le nombre de personnes présentes dans la pièce dans une période de temps spécifiée ; dans lequel
le modèle est produit à l'aide du nombre de personnes (P) reçues.

10. Dispositif d'éclairage selon l'une quelconque des revendications 6 à 8, dans lequel
la zone (1) est une pièce dans un bâtiment ; et le procédé comprend en outre l'étape consistant à :
recevoir, depuis un système de réservation de pièce, le nombre de personnes (P) pour lesquelles la pièce est installée pendant une période de temps spécifiée ;
déterminer la différence entre le nombre de personnes et le nombre estimé de personnes (P) ; et
émettre un signal si la différence dépasse un certain seuil.
